(19) **Europäisches Patentamt / European Patent Office / Office européen des brevets**

(11) **EP 4 529 311 A1**

(12) **EUROPEAN PATENT APPLICATION**
published in accordance with Art. 153(4) EPC

(43) Date of publication:
26.03.2025 Bulletin 2025/13

(21) Application number: 23822841.5

(22) Date of filing: 10.05.2023

(51) International Patent Classification (IPC):
*H04W 68/00* (2009.01)    *H04W 64/00* (2009.01)

(52) Cooperative Patent Classification (CPC):
H04W 64/00; H04W 68/00

(86) International application number:
PCT/CN2023/093202

(87) International publication number:
WO 2023/241271 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.06.2022 CN 202210674457

(71) Applicant: Huawei Technologies Co., Ltd.
Shenzhen, Guangdong 518129 (CN)

(72) Inventors:
• LUO, Hejia
  Shenzhen, Guangdong 518129 (CN)

• MENG, Xian
  Shenzhen, Guangdong 518129 (CN)
• WANG, Xiaolu
  Shenzhen, Guangdong 518129 (CN)
• WANG, Yu
  Shenzhen, Guangdong 518129 (CN)
• WANG, Jun
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **PAGING METHOD AND COMMUNICATION APPARATUS**

(57) This application relates to the field of communication technologies, and provides a paging method and a communication apparatus. The method includes: A network device sends satellite parameter information, where the satellite parameter information includes at least one of the following: satellite ephemeris information, satellite orbit information, and satellite projected track information. A terminal receives the satellite parameter information, determines a projection location of the terminal based on satellite parameter information of a first satellite, and sends the projection location of the terminal to the network device, where the projection location is determined based on a location of the terminal and orbit information of the first satellite, or is determined based on a location of the terminal and projected track information of the first satellite, where the first satellite is a satellite that communicates with the terminal. The network device determines, based on the projection location of the terminal, a device configured to send a paging message, and the terminal receives the paging message. This method can improve paging efficiency and reduce paging overheads.

FIG. 6

EP 4 529 311 A1

**Description**

**CROSS-REFERENCE TO RELATED APPLICATIONS**

This application claims priority to Chinese Patent Application No. 202210674457.5, filed with the China National Intellectual Property Administration on June 14, 2022 and entitled "PAGING METHOD AND COMMUNICATION APPARATUS", which is incorporated herein by reference in its entirety;

**TECHNICAL FIELD**

Embodiments of this application relate to the field of communication technologies, and in particular, to a paging method and a communication apparatus.

**BACKGROUND**

Currently, 5th generation (5th generation, 5G) new radio (new radio, NR) has entered a commercial deployment phase from a standardization phase. An NR standard is researched and designed for a characteristic of terrestrial communication, and has characteristics of providing high-rate, high-reliability, and low-latency communication for a user terminal. Compared with terrestrial communication, non-terrestrial network (non-terrestrial network, NTN) communication has characteristics such as large coverage and flexible networking. Currently, research institutes, communication organizations, companies, and the like have participated in researching NTN communication technologies and standards, aiming to build an integrated communication network for space-air-ground communication.

According to a global navigation satellite system (global navigation satellite system, GNSS) reporting and updating mechanism, a satellite can accurately obtain a location of a terminal. When needing to send paging, the satellite calculates, based on the stored location of the terminal and coverage of the satellite, a satellite and a beam that serve an area in which the terminal is located, and sends a paging message. When a change amount of the location of the terminal exceeds a threshold, a paging area update (tracking area update, TAU) is triggered to notify the satellite of new location information.

When there are a large quantity of satellites for coverage, only one satellite or a batch of satellites that can cover an area in which the terminal is located need to send one or more paging messages, and not all satellites that can cover the area need to send paging. Correspondingly, the terminal only needs to listen to one or more paging messages of one satellite/a batch of satellites that satisfy a specific condition. When the terminal is at a fixed location and is handed over to another batch of satellites that originally do not send paging due to a reason (for example, weather), a network device does not know that the batch of satellites on which the terminal camps is changed, and a paging failure occurs.

**SUMMARY**

This application provides a paging method and a communication apparatus, to reduce paging overheads and improve paging efficiency.

According to a first aspect, this application provides a paging method. The method may be performed by a terminal or a network device. The terminal may be understood as a user equipment (user equipment, UE), a vehicle-mounted device, a chip of the terminal, or the like. A type of the terminal is not specifically limited herein in this application. The terminal may communicate with a satellite. In this application, the satellite may be a geostationary satellite, a non-geostationary satellite, an artificial satellite, a low earth orbit satellite, a medium earth orbit satellite, a high earth orbit satellite, or the like. The terminal may also communicate with a network device. The network device may be understood as a base station, a transmission point, or the like. This is not specifically limited herein in this application. The network device may also communicate with the satellite. This is not specifically limited herein in this application.

The method includes: A network device sends satellite parameter information, where the satellite parameter information includes at least one of the following: satellite ephemeris information, satellite orbit information, and satellite projected track information. A terminal receives the satellite parameter information, and determines a projection location of the terminal based on satellite parameter information of a first satellite, where the projection location is determined based on a location of the terminal and orbit information of the first satellite, or is determined based on a location of the terminal and projected track information of the first satellite, where the first satellite is a satellite that communicates with the terminal. The terminal sends the projection location of the terminal to the network device, so that the network device determines, based on the projection location, a device configured to send a paging message, and the terminal receives the paging message.

In this application, the projection location of the terminal is determined based on the satellite orbit information or the satellite projected track information, and the device for sending paging is determined based on the projection location of the terminal, so that paging efficiency can be improved, and paging overheads can be reduced.

In an optional manner, the projection location indicates an orbit point that is on an orbit of the first satellite and that is closest to the terminal or a point in a neighborhood range of the orbit point; the projection location indicates a track point that is on a projected track of the first satellite and that is closest to the terminal or a point in a neighborhood range of the track point; or the projection location indicates a track segment that is on a projected track of the first satellite and that is closest to the terminal or a track segment in a neighborhood range of the track segment, where the first satellite is a satellite belonging to a ground co-track satellite chain, and the ground co-track satellite chain includes a plurality of satellites that have a same ground projected track.

In this application, the projection location is indicated by using the orbit point on the orbit of the first satellite, or the track point or the track segment on the ground projected track of the first satellite.

In an optional manner, the track point is indicated by using one of the following parameters:

a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

It should be noted that the track point may be indicated by using a distance from the reference point to the track point. For example, the reference point is any point on a projected track 1, and a location 10 meters away from the reference point is the track point. In this case, the track point may be indicated by using 10 meters. The track point may be indicated by using a satellite motion phase difference accumulated from the reference point to the track point. For example, the reference point is any point on a projected track 1, a satellite ground projection is located at the reference point at a moment 1, and the satellite ground projection is located at the track point after X moments. In this case, the track point may be indicated by using a satellite motion phase difference accumulated from the moment 1 to a moment X+1. The track point may be indicated by using a latitude difference accumulated from the reference point to the track point. For example, the reference point is any point on a projected track 1, the reference point is located at latitude 1, and Y latitude needs to be passed from the reference point to the track point. In this case, the track point may be indicated by using the Y latitude. Based on this, the track point may be indicated by using different parameters.

In an optional manner, when the first satellite is not located on the ground co-track satellite chain, the projection location is indicated by using an opening angle between the orbit point closest to the terminal and any point on the orbit of the first satellite relative to the earth center; or when the first satellite is located on the ground co-track satellite chain, the projection location is indicated by using an offset between the track point or the track segment closest to the terminal and the reference point.

In an optional manner, the satellite parameter information further includes a satellite orbit index, and the satellite orbit index indicates the satellite orbit information or the satellite projected track information.

In an optional manner, the projection location further includes a satellite orbit index of the first satellite.

The satellite orbit index of the first satellite is reported, so that a data reporting amount can be reduced, and signaling overheads can be reduced.

In an optional manner, the parameter information further includes a paging number, and the paging number corresponds to a satellite orbit interval or a satellite track interval.

In an optional manner, when the first satellite is not located on the ground co-track satellite chain, a satellite orbit interval of the first satellite is indicated by using an interval between opening angles between any two orbit points on the orbit of the first satellite and any point on the orbit of the first satellite relative to the earth center; or when the first satellite is located on the ground co-track satellite chain, a satellite track interval of the first satellite is indicated by using an interval between offsets between two points on the projected track of the first satellite and the reference point.

In an optional manner, the projection location further includes a paging number corresponding to the first satellite.

The corresponding paging number on the orbit of the first satellite is reported, so that a data reporting amount can be reduced, and signaling overheads can be reduced.

In an optional manner, the satellite orbit information includes at least one of the following: a satellite orbit type, satellite altitude information, satellite inclination angle information, satellite ascending node angle information, and satellite perigee angle information.

In an optional manner, the terminal sends an update message, and the network device receives the update message, where the update message includes a projection location of the terminal on an orbit of a second satellite or a location that is of the terminal and that is on a ground projected track of the second satellite.

In this manner, an update of the paging message can be triggered in a timely manner, to ensure that the terminal device can normally receive the paging message.

In an optional manner, the update message is triggered based on a change of the location of the terminal and a change of the projection location.

In an optional manner, the change of the projection location includes at least one of the following cases:

orbit information or projected track information of the satellite on which the terminal camps is changed, a change of an orbit point of the terminal on the orbit of the first satellite exceeds a preset orbit point threshold, a track point of the terminal on the projected track of the first satellite exceeds a preset track point threshold, and a track segment of the terminal on the projected track of the first satellite exceeds a preset track segment threshold.

In an optional manner, the update message further includes a difference parameter, and the difference parameter is changed satellite orbit information of the second satellite relative to the first satellite or changed satellite projected track information of the second satellite relative to the first satellite.

In an optional manner, when neither the second satellite nor the first satellite is on the ground co-track satellite chain, and the second satellite and the first satellite are located on different orbits, the difference parameter is an ascending node angle or an orbit number of the second satellite;

when the second satellite and the first satellite belong to the same ground co-track satellite chain, the difference parameter includes a location of the reference point; and

when the second satellite and the first satellite belong to different ground co-track satellite chains, the difference parameter is a reference point or a track number of the ground co-track of the second satellite.

In an optional manner, the satellites on the ground co-track satellite chain have a same inclination angle and are located on discrete orbits.

According to a second aspect, this application provides a paging method. A terminal determines a satellite orbit identifier of a device that is to listen to a message; the terminal sends the satellite orbit identifier, where the satellite orbit identifier is used to determine a device configured to send a paging message; and the terminal receives the paging message.

In comparison with the conventional technology, when the terminal can communicate with satellites on a plurality of orbits, the terminal may negotiate with a network device, only a satellite on one or more of the satellite orbits sends a paging message, and the terminal receives only the paging message from the satellite on the one or more satellite orbits, to reduce network side overheads, reduce receiving power consumption of the terminal, and reduces data processing complexity.

In an optional manner, the terminal sends an update message, where the update message is triggered based on a change of a location of the terminal and a change of the satellite orbit identifier stored in the terminal.

According to a third aspect, this application provides a paging method. A network device sends satellite parameter information, where the satellite parameter information includes at least one of the following: satellite ephemeris information, satellite orbit information, and satellite projected track information. A terminal receives the satellite parameter information. The terminal sends a projection location of the terminal, where the projection location is determined based on satellite parameter information of a first satellite; and the projection location is determined based on a location of the terminal and orbit information of the first satellite, or is determined based on a location of the terminal and projected track information of the first satellite, where the first satellite is a satellite that communicates with the terminal. The network device receives the projection location of the terminal. The network device determines, based on the projection location, a device configured to send a paging message. The terminal receives the paging message.

According to a fourth aspect, this application provides a communication apparatus. The communication apparatus may be a terminal (for example, the terminal in the first aspect, the terminal in the second aspect, or the terminal in the third aspect) or a chip disposed in the terminal; or the communication apparatus may be a network device (for example, the network device in the first aspect, the network device in the second aspect, or the network device in the third aspect) or a chip disposed in the network device. The communication apparatus has a function of implementing any one of the first aspect to the third aspect. For example, the communication apparatus includes a corresponding module, unit, or means (means) for performing the steps in any one of the first aspect to the third aspect. The function, unit, or means may be implemented by using software, implemented by using hardware, or implemented by hardware executing corresponding software.

In a possible design, the communication apparatus includes a processing unit and a transceiver unit. The transceiver unit may be configured to send and receive a signal, to implement communication between the communication apparatus and another apparatus. For example, the transceiver unit is configured to send a projection location of a terminal. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the third aspect. The communication apparatus may further include one or more memories. The memory is configured to be coupled to the processor, and the memory may store a necessary computer program or necessary instructions for implementing the function in any one of the first aspect to the third aspect. The processor may execute the computer program or the instructions stored in the memory. When the computer program is executed or the instructions are executed, the communication apparatus is enabled to implement the method in any possible design or implementation in the first aspect to the third aspect.

In still another possible design, the communication apparatus includes a processor. The processor may be configured to be coupled to a memory. The memory may store a necessary computer program or necessary instructions for implementing the function in any one of the first aspect to the third aspect. The processor may execute the computer program or the instructions stored in the memory. When the computer program is executed or the instructions are executed, the communication apparatus is enabled to implement the method in any possible design or implementation in the first aspect to the third aspect.

In still another possible design, the communication apparatus includes a processor and an interface circuit. The processor is configured to: communicate with another apparatus through the interface circuit, and perform the method in any possible design or implementation of the first aspect to the third aspect.

It may be understood that in the fourth aspect, the processor may be implemented by using hardware or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system includes the terminal, the network device, and the satellite in the first aspect to the third aspect.

According to a sixth aspect, this application provides a chip system. The chip system includes a processor, and may further include a memory, to implement the method in any possible design of the first aspect to the third aspect. The chip system may include a chip, or may include a chip and another discrete component.

According to a seventh aspect, this application further provides a computer-readable storage medium. The computer-readable storage medium stores computer-readable instructions. When the computer-readable instructions are run on a computer, the computer is enabled to perform the method in any possible design of the first aspect to the third aspect.

According to an eighth aspect, this application provides a computer program product including instructions. When the computer program product runs on a computer, the computer is enabled to perform the method in various embodiments of the first aspect to the third aspect.

For technical effects that can be achieved in the second aspect to the eighth aspect, refer to the descriptions of the technical effects that can be achieved in the corresponding possible design solutions in the first aspect. Details are not described herein again in this application.

## BRIEF DESCRIPTION OF DRAWINGS

FIG. 1 is a diagram of a transparent forwarding architecture according to an embodiment of this application;
FIG. 2 is a diagram of a regenerative architecture according to an embodiment of this application;
FIG. 3 is a diagram of a communication scenario according to an embodiment of this application;
FIG. 4 is a diagram of another communication scenario according to an embodiment of this application;
FIG. 5A is a diagram of ground co-track satellites;
FIG. 5B is a diagram of movement of ground co-track satellites;
FIG. 6 is a schematic flowchart of a paging method according to an embodiment of this application;
FIG. 7 is a diagram of an address of a satellite according to an embodiment of this application;
FIG. 8A is a diagram of a projection location according to an embodiment of this application;
FIG. 8B is a diagram of a projection location according to an embodiment of this application;
FIG. 9A is a diagram of an orbit interval according to an embodiment of this application;
FIG. 9B is a diagram of a track interval according to an embodiment of this application;
FIG. 10 is a schematic flowchart of another paging method according to an embodiment of this application;
FIG. 11 is a diagram of a structure of a communication apparatus according to an embodiment of this application;
FIG. 12 is a diagram of a structure of a communication apparatus according to an embodiment of this application; and

FIG. 13 is a diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, "a plurality of" means two or more. Therefore, mutual reference may be made to implementations of an apparatus and a method, and repeated descriptions are not provided again.

An NTN system may include a satellite system. Satellite systems may be classified into a highly elliptical orbit (highly elliptical orbit, HEO) satellite, a GEO satellite, a medium earth orbit (medium earth orbit, MEO) satellite, and a LEO satellite based on satellite altitudes, namely, satellite orbital altitudes. In addition, the NTN system may further include an air network device, for example, a high altitude platform (high altitude platform station, HAPS) communication system. The network device in this application is not limited to the foregoing examples.

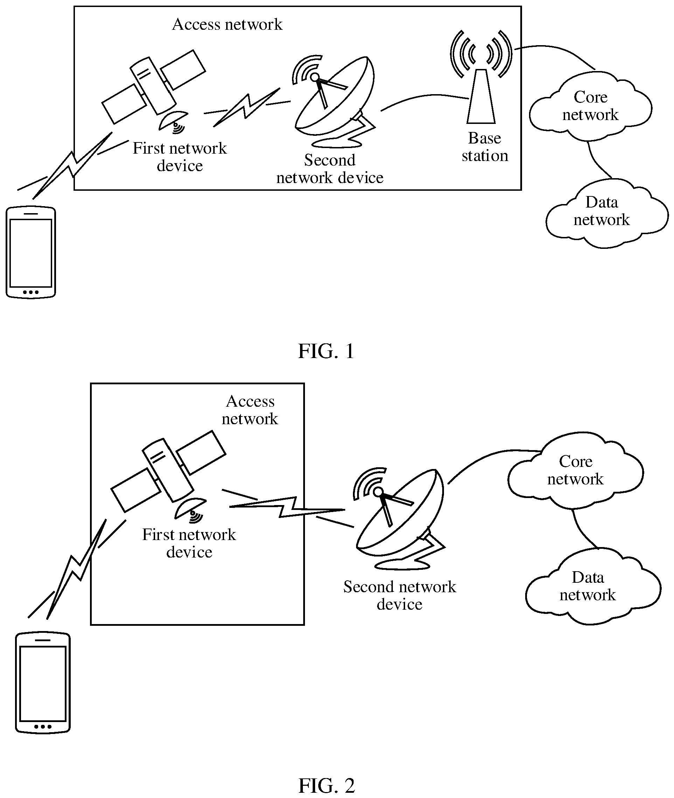

In an example, FIG. 1 is a diagram of an architecture of an NTN network. The NTN network includes a first network device, a second network device, and a terminal. The first network device may be a satellite (or referred to as a satellite base station), for example, may be an HEO satellite, a GEO satellite, an MEO satellite, an LEO satellite, or a HAPS. This is not limited herein. The second network device may be a gateway (gateway) (or referred to as a ground station, an earth station, or a gateway station), and may be configured to connect the second network device to a core network. In FIG. 1, a communication mode of the first network device is a transparent (transparent) mode. To be specific, the first network device serves as a base station for wireless communication, and the second network device may serve as a relay of the first network device and may transparently transmit a signal between the first network device and the terminal. For example, the second network device may access the core network through a base station, and then access a data network.

In embodiments of this application, the communication mode of the first network device may alternatively be a regenerative (regenerative) mode. FIG. 2 is a diagram of another architecture of an NTN network. In FIG. 2, a communication mode of a first network device is a regenerative mode. To be specific, the first network device may serve as a base station for wireless communication. For example, the first network device may be an artificial earth satellite, a high-altitude flight vehicle, or the like that serves as a base station for wireless communication, for example, an evolved NodeB (eNB) or a 5G base station (gNB). A second network device may transparently transmit signaling between the first network device and a core network.

It should be understood that FIG. 1 and FIG. 2 show only one first network device and one second network device. In actual use, an architecture with a plurality of first network devices and/or one second network device may be used based on a requirement. Each first network device may serve one or more terminals, each second network device may correspond to one or more first network devices, and each first network device may correspond to one or more second network devices. This is not specifically limited in this application.

An NTN communication system provides seamless coverage for a terminal device by deploying all or some functions of an access network device on an NTN device (for example, a high altitude platform or a satellite). Because a non-ground device is less affected by a natural disaster, reliability of the communication system can be improved.

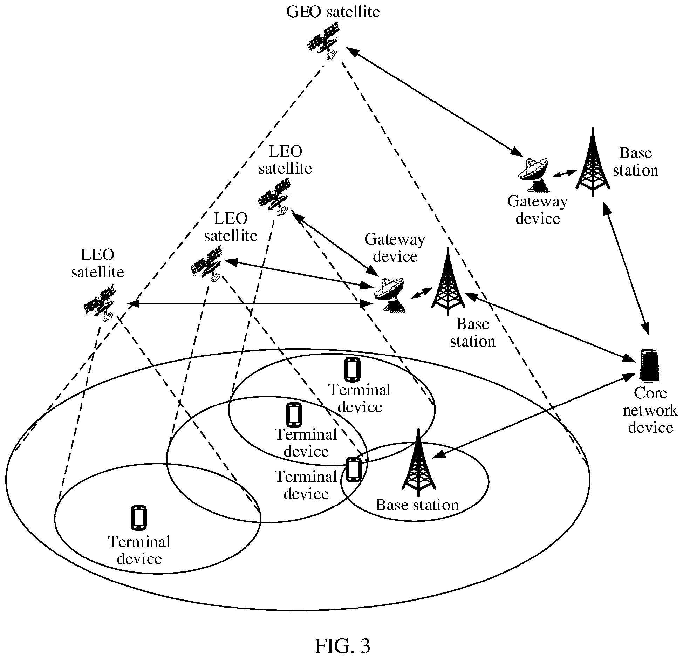

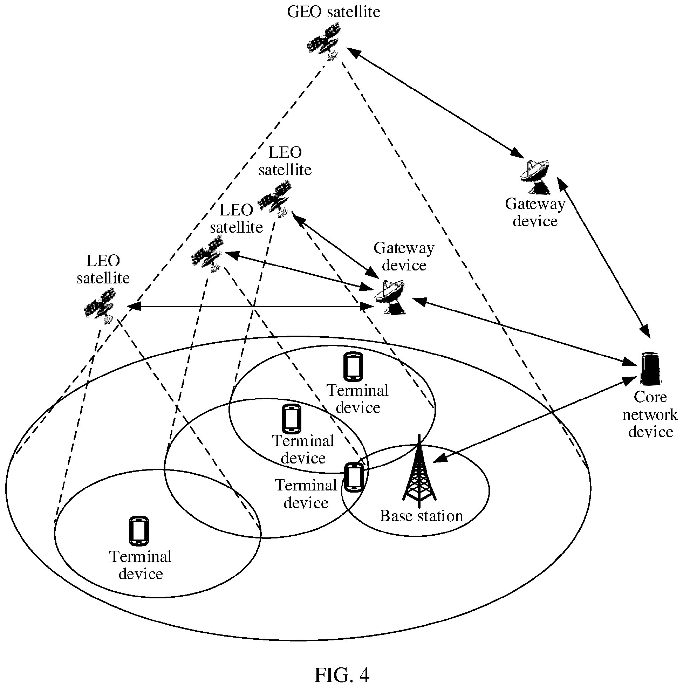

For example, FIG. 3 shows an example of a possible network architecture. In the network architecture shown in FIG. 3, an architecture of an NTN device may be a transparent transmission mode. FIG. 4 shows an example of another possible network architecture. In the network architecture shown in FIG. 4, an architecture of an NTN device may be a regenerative mode.

In an example, the NTN device and an access network device on the ground may be interconnected through a common core network. Alternatively, the NTN device and an access network device on the ground may implement assistance and interconnection with higher time validity through an interface defined between access network devices. Refer to NR. An interface between access network devices may be referred to as an Xn interface, and an interface between the access network device and a core network may be referred to as an NG interface. The NTN device and the access network device on the ground may communicate and collaborate with each other through the Xn interface or the NG interface.

Optionally, a link between the NTN device and a terminal device may be referred to as a service link (service link), and a link between the NTN device and a gateway device may be referred to as a feeder link (feeder link).

A network device may be an NTN device that has all or some functions of an access network device, or may also be an access network device on the ground. The access network device is an entity configured to transmit or receive a signal on a network side, for example, a gNB. The access network device may be a device configured to communicate with a mobile device. The access network device may be an AP in a wireless local area network (wireless local area networks, WLAN), an evolved NodeB (evolved NodeB, eNB or eNodeB) in long term evolution (long term evolution, LTE), a relay station, an access point, integrated access and backhaul (integrated access and backhaul, IAB), a vehicle-mounted device, a wearable device, an access network device in a future 5G network, an access network device in a future evolved public land mobile network (public land mobile network, PLMN), a gNodeB (gNB) in an NR system, or the like. In addition, in embodiments of this application, the access network device serves a cell, and the terminal device communicates with the access network device via a transmission resource (for example, a frequency domain resource or a spectrum resource) used for the cell. The access network device in embodiments of this application may be a central unit (central unit, CU) or a distributed unit (distributed unit, DU). Alternatively, the access network device may include a CU and a DU. The CU and the DU may be physically separated, or may be deployed together. This is not specifically limited in embodiments of this application. One CU may be connected to one DU, or a plurality of DUs may share one CU, so that costs can be reduced and network expansion is easy. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and remaining radio link control (radio link control, RLC) layer, media access control (media access control, MAC) layer, and physical layer are deployed on the DU. The foregoing protocol stack splitting manner is not completely limited in embodiments of this application, and there may be another splitting manner. The CU is connected to the DU through an F1 interface. The CU indicates that a gNB is connected to a core network through an Ng interface. The access network device in embodiments of this application may be a central unit control plane (CU-CP) node or a central unit user plane (CU-UP) node, or the access network device may include a CU-CP and a CU-UP. The CU-CP is responsible for functions of a control plane, and mainly includes RRC and PDCP-C. The PDCP-C is mainly responsible for data encryption and decryption, integrity protection, data transmission, and the like on the control plane. The CU-UP is responsible for functions of a user plane, and mainly includes SDAP and PDCP-U. The SDAP is mainly responsible for processing data of the core network and mapping a flow to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP indicates that the gNB is connected to the core network through the Ng interface, and the CU-CP is connected to the DU through F1-C (control plane). The CU-UP is connected to the DU through F1-U (user plane). Certainly, in another possible implementation, the PDCP-C is alternatively on the CU-UP. The access network device mentioned in embodiments of this application may be a device including a CU or a DU, a device including a CU and a DU, or a device including a control plane CU node (CU-CP node), a user plane CU node (CU-UP node), and a DU node. In addition, in another possible case, the access network device may be another apparatus that provides a wireless communication function for the terminal device. A specific technology and a specific device form that are used for the access network device are not limited in embodiments of this application. For ease of description, in embodiments of this application, an apparatus that provides a wireless communication function for a terminal device is referred to as an access network device.

The terminal device may be a device capable of receiving scheduling and indication information of the access network device (or the NTN device). The terminal device may be a device that provides users with voice and/or data connectivity, a handheld device having a wireless connection function, or another processing device connected to a wireless modem. The terminal device may communicate with one or more core networks or the internet through a radio access network (for example, a radio access network, RAN). The terminal device may be a mobile terminal device, such as a mobile telephone (or referred to as a "cellular" phone, or a mobile phone (mobile phone)), a computer, or a data card, for example, may be a portable, pocket-sized, handheld, computer built-in, or vehicle-mounted mobile apparatus, and exchange language and/or data with the radio access network. For example, the terminal device is a device such as a personal communication service (personal communications service, PCS) telephone, a cordless telephone, a session initiation protocol (SIP) telephone, a wireless local loop (wireless local loop, WLL) station, a personal digital assistant (personal digital assistant, PDA), a tablet computer (Pad), and a computer having a wireless transceiver function. The terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), a customer premises equipment (customer premises equipment, CPE), a terminal (terminal), a UE, a mobile terminal (mobile terminal, MT), or the like. Alternatively, the terminal device may be a wearable device, a terminal device in a next-generation communication system, for example, a 5G network, a terminal device in a future evolved PLMN network, or a terminal device in a new radio (new radio, NR) communication system. The terminal device may further be a terminal that communicates with the NTN device.

In addition, embodiments of this application may be further applied to another future-oriented communication technology, for example, a 6th generation mobile communication network (6G). Network architectures and service scenarios described in this application are intended to describe the technical solutions in this application more clearly, and do not constitute a limitation on the technical solutions provided in this application. A person of ordinary skill in the art may know that: With evolution of the network architecture and emergence of a new service scenario, the technical solutions provided in this application are also applicable to similar technical problems.

For ease of understanding embodiments of this application, the following first briefly describes terms in embodiments of this application.

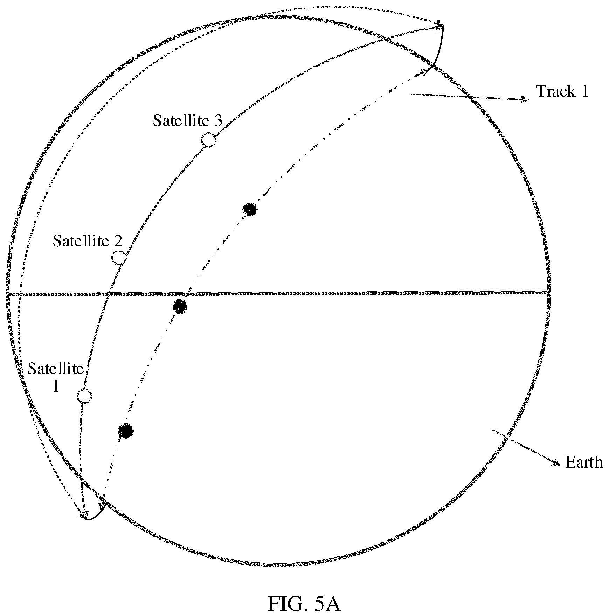

(1) Ground co-track satellite chain: It includes a group of satellites having a same orbital inclination angle, but each satellite is on a discrete orbit, and projected tracks of the satellites on the ground are the same. As shown in FIG. 5A, a satellite 1, a satellite 2, and a satellite 3 are a group of satellites having a same orbital inclination angle and whose ground projected tracks are all a track 1. To enable tracks of a ground co-track satellite chain on the ground are the same, all satellites on the satellite chain need to have a same orbital inclination angle, and any two satellites also have a same ratio of a right ascension of the ascending node (right ascension of the ascending node, RAAN) difference (right ascension of the ascending node difference, where the ascending node is a point at which a satellite passes from the southern hemisphere to the northern hemisphere through the equator) to an argument of latitude (argument of latitude, AoL) difference (argument of latitude difference, where the argument of latitude difference indicates an angular distance between any position of a planet or a satellite on its orbit and the ascending node), and the ratio can exactly compensate for longitude drift caused by the earth's rotation and orbital perturbation, that is, the ratio satisfies the following formula:

$$\frac{\omega_E - \dot{\Omega}}{n_0 + \dot{M}_0 + \dot{\omega}} = \frac{\delta RAAN}{\delta AoL}$$

$\omega_E$ is an angular velocity of the earth's rotation, $n_0$ is a satellite motion angular velocity, $\dot{\Omega}$ is an orbital perturbation amount of right ascension of the ascending node, $\dot{M}_0$ is an orbital perturbation amount of a mean anomaly, $\dot{\omega}$ is an orbital perturbation amount of an argument of perigee, $\delta RAAN$ is the right ascension of the ascending node difference between satellite orbits, and $\delta AoL$ is the argument of latitude difference between the satellites.

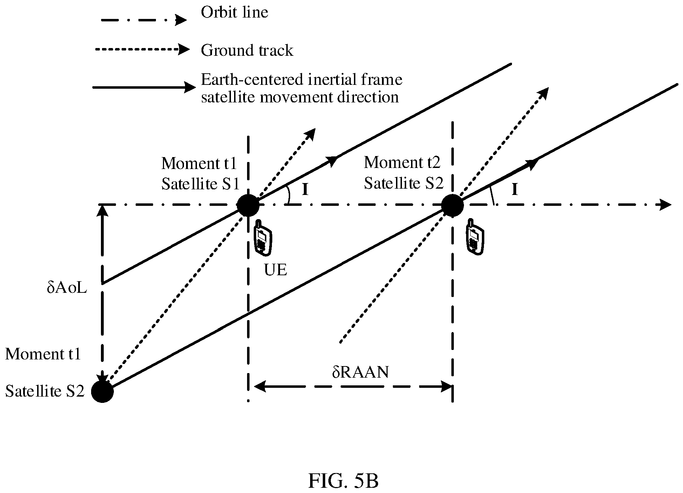

As shown in FIG. 5B, a satellite S1 and a satellite S2 are two satellites of a ground co-track satellite chain. The satellite S1 and the satellite S2 are both on independent orbits, and have a same orbital inclination angle I. At a moment t1, the satellite S1 passes from south to north through the equator, a ground projection of the satellite S1 is exactly located at a UE, and the satellite S2 is at south of the equator and west of the satellite S1. Because of the earth's rotation, the satellite S2 also passes through a same point on the equator at a moment t2, and a ground projection of the satellite S2 is also exactly located at the UE (it is assumed that the UE is stationary relative to the earth). Although the satellite S1 and the satellite S2 run on different orbits, their moving tracks on the ground are the same.

(2) Ground co-track constellation: It is a constellation including one or more ground co-track satellite chains.

As described in the background, when there are a large quantity of satellites for coverage, paging overheads are high, and a paging failure may occur. The following describes in detail a paging method provided in embodiments of this application with reference to the accompanying drawings.

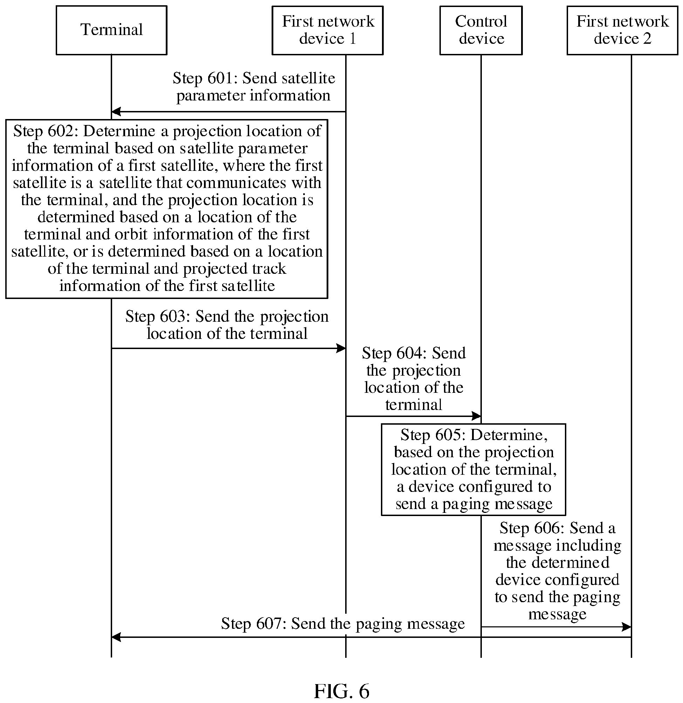

FIG. 6 is a flowchart of a paging method according to an embodiment of this application. In the following descriptions, examples in which the method is applied to the communication architectures shown in FIG. 1 and FIG. 2 are used. Data exchanging between a terminal, a first network device (for example, the first network device in FIG. 1 and FIG. 2, or may be referred to as a satellite base station), and a control device (which may be understood as a device in a core network or another management network element device) may be used as an example for description. It should be noted that the communication systems in FIG. 1 and FIG. 2 are merely used as examples in embodiments of this application. A scenario is not limited thereto. In FIG. 6, data exchanging between a terminal, a first network device 1, a control device, and a first network device 2 is used as an example for description. The first network device 1 and the first network device 2 are first network devices that serve the terminal in different time periods. There may be a plurality of first network devices 2, and the first network device 2 may include the first network device 1. This is not specifically limited herein. Data may be transmitted between the first network device and the control device through a second network device. To be specific, the first network device may first transmit the data to the second network device, and then transmit the data to the control device through the second network device. Details are not described in FIG. 6.

Step 601: The first network device 1 sends satellite parameter information, where the satellite parameter information includes at least one of the following: satellite ephemeris information, satellite orbit information, and satellite projected track information.

Correspondingly, the terminal receives the satellite parameter information. The first network device 1 may be understood as a satellite base station, or a satellite that can currently exchange data with the terminal device.

It should be noted that the satellite ephemeris information may include parameters such as time, coordinates, an orientation, and a speed of a satellite. For example, the parameters such as the time, the coordinates, the orientation, and the speed of the satellite are determined based on a mathematical relationship between six orbit parameters of Kepler's law. The satellite ephemeris information can be used to accurately calculate, predict, describe, and track running states such as time, a location, and a speed of the satellite or a flying body, and determine the satellite orbit information. The satellite orbit information is information that can reflect a satellite orbit, and may include information indicating an orbit inclination angle, an orbit altitude, and the like of the satellite. The satellite projected track information may be understood as a ground projected track of a satellite on a ground co-track satellite chain. In an actual application, the first network device may send, to the terminal, satellite parameter information of a plurality of satellites managed by the first network device; or send, to the terminal, satellite parameter information obtained by the first network device from another first network device. Certainly, the first network device may alternatively send parameter information of some satellites to the terminal. Possibly, the some satellites are satellites that are determined by the first network device based on a location of the terminal and that may have information transmission with the terminal.

Step 602: The terminal determines a projection location of the terminal based on satellite parameter information of a first satellite, where the first satellite is a satellite that communicates with the terminal, and the projection location is determined based on the location of the terminal and orbit information of the first satellite, or is determined based on the location of the terminal and projected track information of the first satellite.

That the first satellite is a satellite that communicates with the terminal may be understood as a satellite that is exchanging data with the terminal, a satellite from which the terminal is listening to a message, or the like. This is not specifically limited herein in this application.

In addition, if the first satellite is not a satellite on the ground co-track satellite chain, the projection location of the terminal may be determined based on the orbit information of the first satellite and the location of the terminal. For example, a projection of the terminal on an orbit of the first satellite is used as the projection location of the terminal. If the first satellite is a satellite on the ground co-track satellite chain, the projection location of the terminal may be determined based on the projected track information of the first satellite and the location of the terminal. For example, a point that is on a projected track of the first satellite and that is closest to the terminal is used as the projection location. Example descriptions are merely provided herein, and a manner of determining the projection location of the terminal is not limited.

Optionally, the projection location may indicate an orbit point that is on the orbit of the first satellite and that is closest to the terminal or a point in a neighborhood range of the orbit point; the satellite projection location of the first satellite belonging to the ground co-track satellite chain may indicate a track point that is on the projected track of the first satellite and that is closest to the terminal or a point in a neighborhood range of the track point; or the projection location may indicate a track segment that is on the projected track of the first satellite and that is closest to the terminal or a track segment in a neighborhood range of the track segment.

In this application, the projection location is indicated by using the orbit point on the orbit of the first satellite and the track point or the track segment on the ground projected track of the first satellite, so that a property that satellites on the ground co-track satellite chain have a same ground projected track can be fully used.

Optionally, the track point may be indicated by using one of the following parameters:

a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

It may be understood that the track point may be indicated by using a distance from the reference point to the track point. For example, the reference point is any point on a projected track 1, and a location 10 meters away from the reference point is the track point. In this case, the track point may be indicated by using 10 meters. The track point may be indicated by using a satellite motion phase difference accumulated from the reference point to the track point. For example, the reference point is any point on a projected track 1, a satellite ground projection is located at the reference point at a moment 1, and the satellite ground projection is located at the track point after X moments. In this case, the track point may be indicated by using a satellite motion phase difference accumulated from the moment 1 to a moment X+1. The track point may be indicated by using a latitude difference accumulated from the reference point to the track point. For example, the reference point is any point on a projected track 1, the reference point is located at latitude 1, and Y latitude needs to be passed from the reference point to the track point. In this case, the track point may be indicated by using the Y latitude. Based on this, the track point may be indicated by using different parameters.

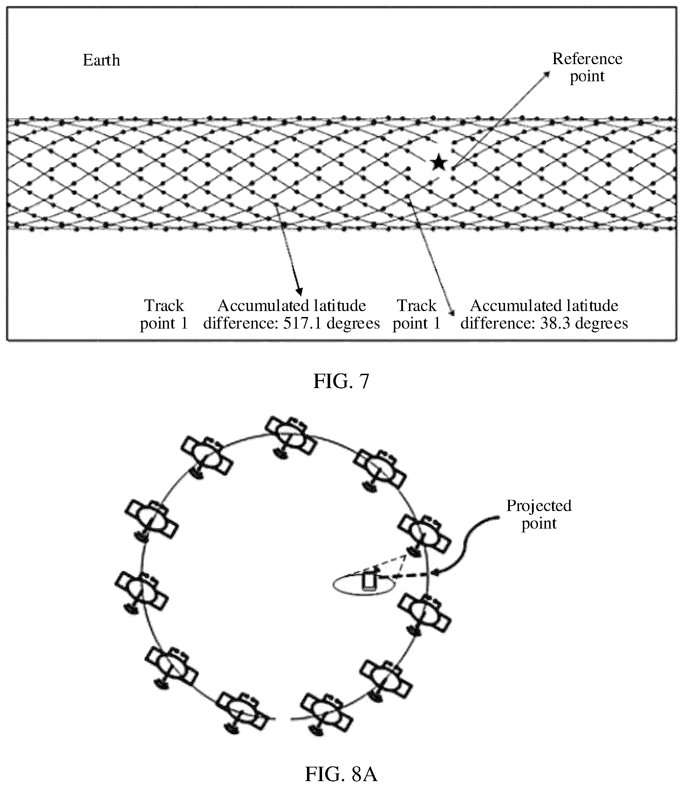

In an actual application, a track location accumulated from the reference point to the track point may be defined as a ground projected track address (ground track address, GTA). As shown in FIG. 7, a track point shown by a pentagram is a reference point, if an accumulated latitude difference of a satellite moving along a ground projected track is used as a location difference, a GTA of a track point 1 is a latitude difference accumulated from the reference point to the track point 1, that is, 38.3 degrees, and a GTA of a track point 2 is a latitude difference accumulated from the reference point to the track point 2, that is, 517.1 degrees. In addition, when there are a plurality of satellite tracks on the ground, each satellite track may be distinguished by using a track number, and a track location may be jointly described by using the track number and a location on the track. In addition, a track segment of the ground track may be defined as a ground track address range (ground track address range, GTAR), and may be generally described by using GTAs at two ends of the track, for example, a track segment GTAR between the track point 1 and the track point 2 is (GTA0, GTA1).

To better describe the projection location, the following provides descriptions based on different cases of the first satellite.

Case 1: The first satellite is not located on the ground co-track satellite chain.

The projection location may be indicated by using an angle between the orbit point closest to the terminal and any point on the orbit of the first satellite relative to the earth center.

For a conventional satellite orbit, orbit information may be described by using an altitude, an inclination angle, and an angle of an ascending node, and a projection location is described by using an angle offset range (for example, an opening angle between a current satellite location and an ascending node relative to the earth center) compared with an agreed reference point on the orbit. For example, an orbit and a projection location may be determined based on the following parameters: RAAN: Q, an orbit altitude: h, an orbit inclination angle: $\alpha$, and the projection location: an opening angle between the foregoing orbit and a reference point (an ascending node) relative to the earth center. As shown in FIG. 8A, an orbit point of a terminal on a satellite orbit is A, and an opening angle between the orbit point and an ascending node relative to the earth center indicates a projection location. In the figure, PH0 indicates the projection location.

Case 2: The first satellite is located on the ground co-track satellite chain.

The projection location of the terminal may be indicated by using an offset between the track point or the track segment closest to the terminal and the reference point.

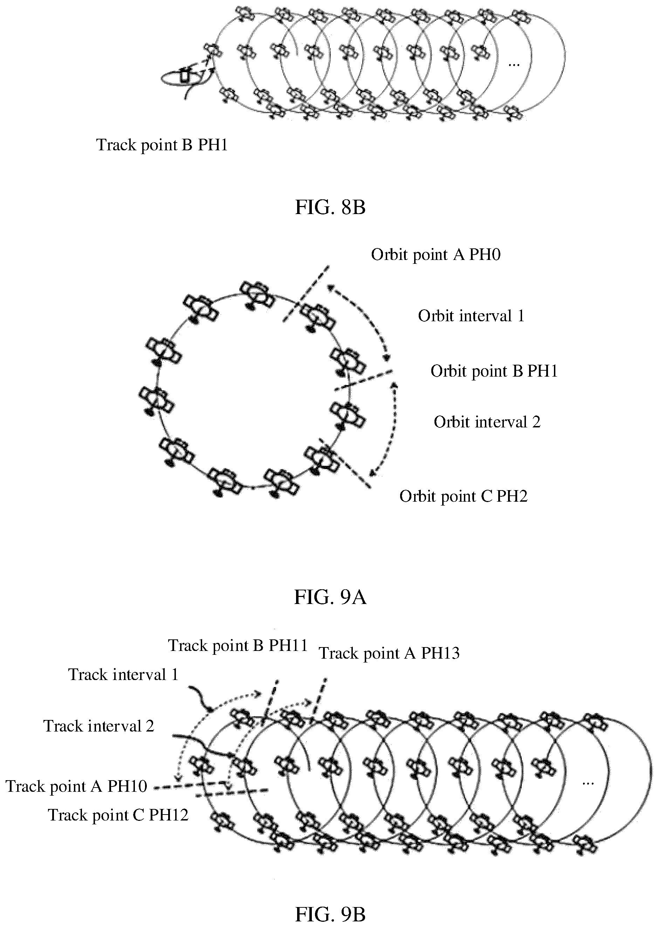

For a satellite on the ground co-track satellite chain, orbit information may be described by using an orbital altitude, an orbital inclination angle, reference RAAN, and a reference AoL, and a projection location may be described by using an offset range compared with an agreed reference point (an intersection point between an orbit and the equator, or start RAAN and a start AoL) on a projected track. For example, an orbit and a projection location may be determined based on the following parameters: RAAN: $\Omega0$, a reference location AoL: ph0, an orbit altitude: h, an orbit inclination angle: $\alpha$, and the projection location: a phase offset between a satellite moving track and the reference location. As shown in FIG. 8B, a track point that is on a ground co-track satellite track and that is closest to a terminal is a track point B, and an offset between the track point B and a reference point is PH1. A projection location may be indicated by using PH1, or may be indicated by using a GTA of the track point B.

Step 603: The terminal sends the projection location of the terminal to the first network device 1.

Correspondingly, the first network device 1 receives the projection location of the terminal.

Step 604: The first network device 1 sends the projection location of the terminal to the control device.

Correspondingly, the control device receives the projection location of the terminal.

Step 605: The control device determines, based on the projection location of the terminal, a device configured to send a paging message.

Certainly, when the communication architecture is in a regenerative mode and a data processing capability of the first network device 1 is strong, step 604 may not be performed, and step 605 may alternatively be performed by the first network device 1. This is not specifically limited herein in this application.

The control device determines, through calculation based on the projection location that is of the terminal and that is sent by the terminal and the satellite parameter information, a satellite that can send a paging message to the terminal. Specifically, the control device infers, based on the projection location of the terminal, a potential area of the terminal on the ground, and further determines, when the paging message is sent, a set of satellites that can cover the area, where the set of satellites includes the satellite that sends the paging message. After the satellite that sends the paging message is determined, the satellite that sends the paging message may send the paging message to the terminal, or may choose, based on a current communication status of the satellite, whether to send the paging message. For example, a satellite 2 that is determined by the control device and that is for sending the paging message currently performs a large quantity of services, occupies a large quantity of resources, and cannot allocate more resources to send the paging message. In this case, the satellite 2 that sends the paging message may not send the paging message. Example descriptions are merely provided herein, and the satellite that sends the paging message is not specifically limited.

Step 606: The control device sends a message including the determined device configured to send the paging message.

The device that is determined by the control device and that is configured to send the paging message is the first network device 2. Possibly, the first network device 2 is specifically determined based on the projection location of the terminal.

Correspondingly, the first network device 2 receives the message.

Step 607: The first network device 2 sends the paging message.

Correspondingly, the terminal may receive the paging message.

In this application, the projection location of the terminal is determined based on the satellite orbit information or the satellite projected track information, and the satellite that sends the paging message is determined based on the projection location of the terminal, so that paging efficiency can be improved, and paging overheads can be reduced.

Optionally, the satellite parameter information in step 601 further includes a satellite orbit index, and the satellite orbit index indicates the satellite orbit information or the satellite projected track information. In this case, when reporting the projection location of the terminal, the terminal may further include a satellite orbit index of the first satellite. The satellite orbit index of the first satellite is reported, so that a data reporting amount can be reduced, and signaling overheads can be reduced. Optionally, the satellite orbit information includes at least one of the following: a satellite orbit type, satellite altitude information, satellite inclination angle information, satellite ascending node angle information, and satellite perigee angle information. Certainly, in an actual application, another parameter may be further included, and details are not described herein. As shown in the following Table 1, a first network device may notify a terminal of satellite parameter information via RRC signaling, broadcast signaling, or the like. The satellite parameter information includes a satellite orbit index, and satellite orbit information or satellite projected track information may be determined based on the satellite orbit index. In Table 1, a satellite orbit index 1 indicates that a satellite orbit type is a conventional satellite orbit, and indicates a satellite orbit parameter set 1 (an orbit altitude h1, an orbit inclination angle $\alpha$1, RAAN $\Omega$1, and the like). A satellite orbit index 3 indicates that a satellite orbit type is a ground co-track satellite, and indicates a satellite orbit parameter set 3 (an orbital altitude h3, an orbital inclination angle $\alpha$3, a RAAN $\Omega$3, a reference location ph3, and the like). Examples are not enumerated herein. The first network device delivers the satellite parameter information including the satellite orbit index to the terminal. When reporting projection location information of the terminal, the terminal reports the satellite orbit index of the first satellite, and does not need to report all orbit parameter information or projected track information of the first satellite, so that an amount of data reported by the terminal can be reduced, and signaling overheads can be further reduced.

**Table 1**

| Satellite orbit index | Orbit type | Orbit parameter descriptions |
| --- | --- | --- |
| 1 | Conventional orbit | Parameter set 1 ($\Omega$1, h1, $\alpha$1) |
| 2 | Conventional orbit | Parameter set 2 ($\Omega$2, h2, $\alpha$2) |
| 3 | Ground co-track satellite | Parameter set 3 ($\Omega$3, ph3, h3, $\alpha$3) |
| 4 | Ground co-track satellite | Parameter set 4 ($\Omega$4, ph4, h4, $\alpha$4) |
| ... | ... | ... |

Optionally, the satellite parameter information in step 601 further includes a paging number, and the paging number corresponds to a satellite orbit interval or a satellite track interval. In this case, when reporting the projection location of the terminal, the terminal may further include the paging number corresponding to the first satellite. The paging number of the first satellite is reported, so that a data reporting amount can be reduced, and signaling overheads can be reduced.

To better describe the satellite orbit interval or the satellite track interval, the following provides descriptions based on different cases of the first satellite.

Case 1: The first satellite is not located on the ground co-track satellite chain.

A satellite orbit interval of the first satellite is indicated by using an interval between opening angles between any two orbit points on the orbit of the first satellite and any point on the orbit of the first satellite relative to the earth center.

For a conventional satellite orbit, orbit information may be described by using an altitude, an inclination angle, and an angle of an ascending node, and any point on an orbit may be described by using an angle offset range (for example, an opening angle between a current satellite location and the ascending node relative to the earth center) compared with an agreed reference point on the orbit. For example, an orbit and any point on the orbit may be determined based on the following parameters: RAAN: Q, an orbit altitude: h, an orbit inclination angle: $\alpha$, and any point on the orbit: an opening angle between the foregoing orbit and a reference point (an ascending node) relative to the earth center. As shown in FIG. 9A, orbit points of a satellite orbit are A, B, and C, and opening angles between the orbit points and an ascending node relative to the earth center are respectively PH0, PH1, and PH2, where PH0 and PH1 indicate an orbit interval 1, and PH1 and PH2 indicate an orbit interval 2.

Case 2: The first satellite is located on the ground co-track satellite chain.

A satellite track interval of the first satellite is indicated by using an interval between offsets between two points on the projected track of the first satellite and the reference point.

For a satellite on the ground co-track satellite chain, orbit information may be described by using an orbital altitude, an orbital inclination angle, reference RAAN, and a reference AoL, and any point on a projected track may be described by using an offset range compared with an agreed reference point (an intersection point between an orbit and the equator, or start RAAN and a start AoL) on the projected track. For example, an orbit and a track point may be determined based on the following parameters: reference location RAAN: $\Omega$0, a reference location AoL: ph0, an orbit altitude: h, an orbit inclination angle: $\alpha$, and a location of the track point: a phase offset between a satellite moving track and the reference location indicates the track point. As shown in FIG. 9B, offsets between track points A, B, C, and D on a ground co-track satellite track and a reference point on a projected track are respectively PH10, PH11, PH12, and PH13, where PH10 and PH11 indicate a track interval 1, and PH12 and PH13 indicate a track interval 2. Alternatively, a track segment GTAR is used for indication. It is assumed that a GTA of a track point A is GTA1, a GTA of a track point B is GTA2, a GTA of a track point C is a GTA3, and a GTA of a track point D is GTA4, where a track interval 1 may be GTAR1=(GTA1, GTA2), and a track interval 2 may be GTAR2=(GTA3, GTA4).

As shown in the following Table 2, a network device may notify a terminal of satellite parameter information via RRC signaling, broadcast signaling, or the like. The satellite parameter information includes a paging number, and satellite orbit information or satellite projected track information may be determined based on the paging number. In Table 2, a paging number 1 indicates that a satellite orbit type is a conventional satellite orbit, and indicates a satellite orbit interval set 1 (an orbit altitude h1, an orbit inclination angle $\alpha1$, a paging interval [ph0 ph1], and the like). A paging number 3 indicates that a satellite orbit type is a ground co-track satellite, and indicates a satellite track interval parameter set 3 (an orbital altitude h3, an orbital inclination angle $\alpha3$, RAAN $\Omega1$, a reference location ph1, a paging interval [ph11 ph22], and the like). Examples are not enumerated herein and example descriptions are merely provided. The network device 1 delivers the satellite parameter information including the paging number to the terminal. When reporting projection location information of the terminal, the terminal reports the paging number of the first satellite, and does not need to report all orbit parameter information or projected track information of the first satellite, so that an amount of data reported by the terminal can be reduced, and signaling overheads can be further reduced.

**Table 2**

| Paging number | Orbit type | Descriptions of an orbital region |
| --- | --- | --- |
| 1 | Conventional orbit | Parameter set 1 (h1, $\alpha1$, [ph0 ph1]) |
| 2 | Conventional orbit | Parameter set 2 (h2, $\alpha2$, [ph1 ph2]) |
| 3 | Ground co-track satellite | Parameter set 3 ($\Omega1$, h3, $\alpha3$, [ph11 ph12]) |
| 4 | Ground co-track satellite | Parameter set 4 ($\Omega2$, h4, $\alpha4$, [ph21 ph22]) |
| ... | | ... |

Certainly, after receiving the paging number reported by the terminal, the network device 1 may indicate a satellite in a range of the satellite orbit interval (or the satellite track interval) to send a paging message, or may indicate a satellite in an interval slightly larger or smaller than the satellite orbit interval (or the satellite track interval) to send a paging message. This is not specifically limited herein in this application. For example, if the terminal reports the paging number 1 in Table 2, the network device may indicate a satellite in the satellite orbit interval [ph0 ph1] to send a paging message, may indicate a satellite in an interval smaller than [ph0 ph1] to send a paging message, or may indicate a satellite in an interval greater than [ph0 ph1] to send a paging message. Example descriptions are merely provided herein in this application, and a satellite that sends paging is not specifically limited.

To ensure paging reliability in different weather or channel environments, a UE may camp on a cell served by a plurality of satellites, in other words, the terminal listens to paging messages of the plurality of satellites, and the plurality of satellites send the paging messages. In this case, the UE may report projection locations on orbits of a plurality of satellites on which the UE intends to camp, so that the first network device, the core network, or the another management network element knows satellites that need to be selected to send paging messages. If the terminal finds that an existing satellite is not suitable for camping on (for example, due to deterioration of channel quality), the terminal sends an update message to notify the network device, to request to deactivate some projection locations. Correspondingly, the terminal may further initiate an update message due to discovery of an appropriate satellite, to notify the network device that a new projection location needs to be activated, and further notify the first network device that a satellite for sending a paging message may be added.

Optionally, when both the location of the terminal and the projection location of the terminal are changed, the terminal triggers an update message, where the update message includes a projection location of the terminal on an orbit of a second satellite or a location that is of the terminal and that is on a ground projected track of the second satellite.

It may be understood that the change of the location of the terminal may be understood as that the location of the terminal is changed, but the location of the terminal is changed, and the projection location of the terminal may not be changed. The terminal may further receive the paging message of the paging satellite. However, when the location of the terminal is changed, and the projection location of the terminal is also changed, it is determined that a satellite on which the terminal intends to camp is changed, so that a change message needs to be triggered. Generally, when the change message is triggered, the network device performs calculation based on a new projection location that is of the terminal and that is reported by the terminal, to re-determine a paging satellite that needs to send a paging message. Assuming that paging satellites determined based on the change of the location of the terminal are 4, 5, 6, and 7, and paging satellites determined based on the change of the projection location are 3, 4, 5, and 8, the network device may use satellites 4 and 5 as paging satellites to send paging messages. In this manner, the paging satellites determined by the network device based on the triggered update information are more accurate.

Optionally, the change of the projection location includes at least one of the following cases: orbit information or projected track information of the satellite on which the terminal camps is changed, a change of an orbit point of the terminal on the orbit of the first satellite exceeds a preset orbit point threshold (for example, the orbit point threshold is A, a previous orbit point of the terminal on the orbit of the first satellite is S1, but a current orbit point is changed to S2, and an absolute value difference between S2 and S1 is greater than A), a track point of the terminal on the projected track of the first satellite exceeds a preset track point threshold (for example, the track point threshold is B, a previous track point of the terminal on the projected track of the first satellite is G1, but a current track point is changed to G2, and an absolute value difference between G2 and G1 is greater than B), and a track segment of the terminal on the projected track of the first satellite exceeds a preset track segment threshold (for example, the track segment threshold is C, and a previous track segment of the terminal on the projected track of the first satellite is G1 to G2, but a current track segment is changed to G4 to G5, and an absolute value difference between G4 and G2 is greater than C).

In addition, it should be further noted that the change of the orbit information or the projected track information of the satellite on which the terminal camps includes the following cases: The projection location of the terminal is changed from an orbit point A on an orbit A (the orbit of the first satellite) to an orbit point B on an orbit B (the orbit of the second satellite). The orbit A and the orbit B are not the same. The projection location of the terminal is changed from a track point A (the projected track of the first satellite) to a track point B (the projected track of the second satellite). The projected track of the first satellite is different from the projected track of the second satellite, in other words, the first satellite and the second satellite belong to different ground co-track satellite chains; or the projected track of the first satellite is the same as the projected track of the second satellite, but the track point A and the track point B belong to different track segments. The projection location of the terminal is changed from an orbit point on the orbit A (the orbit of the first satellite) to the track point B (the projected track of the second satellite). The first satellite is a conventional orbit satellite, and the second satellite is a satellite on a ground co-track satellite chain. The projection location of the terminal is changed from the track point A (the projected track of the first satellite) to the orbit point B in the orbit B (the orbit of the second satellite). The first satellite is a satellite on a ground co-track satellite chain, and the second satellite is a conventional orbit satellite.

The second satellite may be understood as a satellite on which the terminal currently intends to camp. This is not specifically limited herein. When the terminal triggers the update message, the terminal may send the new projection location of the terminal and satellite parameter information of the second satellite to the network device, or may send the new projection location of the terminal and a satellite orbit index of the second satellite or a paging number corresponding to the second satellite.

Optionally, the update message further includes a difference parameter, and the difference parameter is changed satellite orbit information of the second satellite relative to the first satellite or changed satellite projected track information of the second satellite relative to the first satellite. In this manner, an amount of information reported by the terminal can be reduced, so that the signaling overheads are reduced.

Optionally, when neither the second satellite nor the first satellite is on the ground co-track satellite chain, and the second satellite and the first satellite are located on different orbits, the difference parameter is an ascending node angle (for example, when the first satellite and the second satellite are conventional orbital satellites and have a same inclination angle and a same altitude, only an orbit parameter RAAN may be reported, and a remaining part is determined by the first network device, the core network, or the another network management device based on a satellite parameter of the first satellite) or an orbit number of the second satellite; when the second satellite and the first satellite belong to the same ground co-track satellite chain, the difference parameter includes a location of the reference point (for example, when the first satellite and the second satellite are satellites in the same ground co-track satellite chain, only the location of the reference point may be reported, and a remaining part is determined by the first network device, the core network, or the another network management device based on a satellite parameter of the first satellite); and when the second satellite and the first satellite belong to different ground co-track satellite chains, the difference parameter is a reference point or a track number of the ground co-track of the second satellite (for example, when the first satellite and the second satellite are satellites in different ground co-track satellite chains, only the track number of the ground co-track of the second satellite may be reported, and a remaining part is determined by the first network device, the core network, or the another network management device).

In addition, for an initial access satellite, the first network device may notify the terminal of a smallest satellite that needs to listen to paging.

In addition, it is further proposed in a related technology that when covering different areas, a satellite sends different paging area codes (tracking area codes, TACs). When covering a plurality of TAC areas, a satellite sends a plurality of TACs. When the satellite stops broadcasting a TAC, a UE needs to be notified. The UE does not need to trigger a TAU provided that the UE finds that one of the broadcast TACs belongs to a registration area of the UE. Therefore, a network broadcasts a plurality of TACs and increases or decreases the TACs in real time, to prevent the UE from triggering the TAU only due to movement of the satellite. The TAC is one-to-one correspond to a cell served by the satellite. This is similar to a paging number. When covering areas corresponding to a plurality of TACs, a satellite base station needs to send the plurality of TACs, and there is redundancy in to-be-sent information.

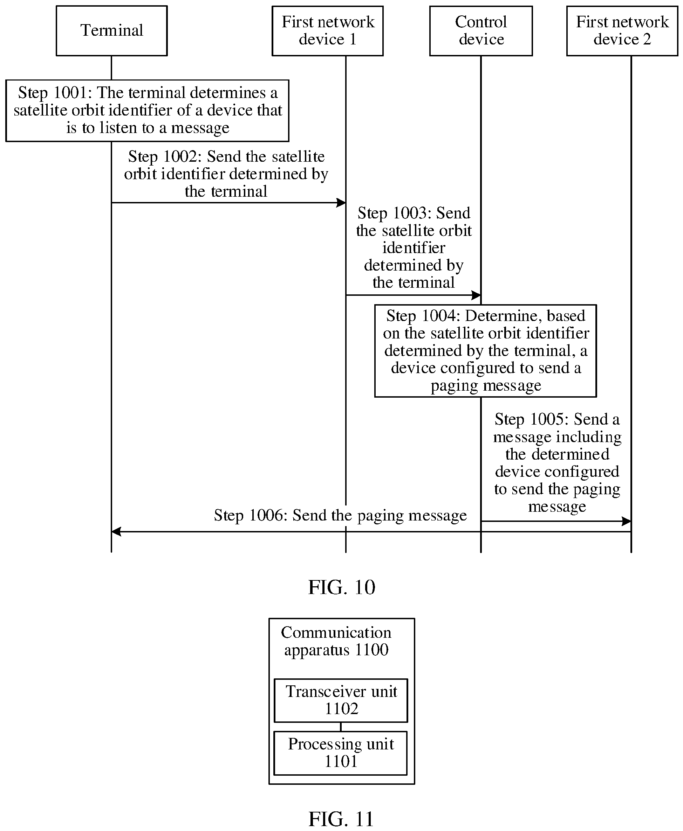

In consideration of the foregoing case, this application further provides another paging method. As shown in FIG. 10, the paging method may be performed through interaction between a terminal, a first network device 1, a control device, and a first network device 2. For understanding of the first network device 1, the control device, and the first network device 2, refer to the descriptions in FIG. 1 and FIG. 2. The following steps are performed.

Step 1001: The terminal determines a satellite orbit identifier of a device that is to listen to a message.

Because a plurality of satellites may be located on a same orbit, one satellite orbit identifier may correspond to a plurality of satellites, namely, a set of satellites. There is a correspondence between the satellite orbit identifier and a TAC, in other words, the TAC corresponds to the satellite orbit identifier in this application. In addition, the correspondence may be agreed upon in advance by the first network device and the terminal, or may be sent to the terminal in advance after being determined by the first network device. The correspondence is prestored in the terminal, the first network device, the control device, and the like.

Step 1002: The terminal sends the satellite orbit identifier determined by the terminal to the first network device 1.

Correspondingly, the first network device 1 receives the satellite orbit identifier determined by the terminal.

Step 1003: The first network device 1 sends, to the control device, the satellite orbit identifier determined by the terminal.

Correspondingly, the control device receives the satellite orbit identifier determined by the terminal.

Step 1004: The control device determines, based on the satellite orbit identifier determined by the terminal, a device (namely, the first network device 2) configured to send a paging message.

Certainly, when a communication architecture is in a regenerative mode and a data processing capability of the first network device 1 is strong, step 1003 may not be performed, and step 1004 may alternatively be performed by the first network device 1. This is not specifically limited herein in this application.

Step 1005: The control device sends a message including the determined device configured to send the paging message.

Step 1006: The first network device 2 sends the paging message.

Correspondingly, the terminal receives the paging message from the first network device 2.

Optionally, the terminal sends an update message, where the update message is triggered based on a change of a location of the terminal and a change of the satellite orbit identifier stored in the terminal. For example, if a UE reselects from a satellite on one orbit to a satellite on another orbit, and finds that a satellite orbit identifier is not in a list recorded by the UE, the UE sends an update message, and the UE records a new satellite orbit identifier. The UE determines, based on a first message, an orbit of a satellite that needs to listen to a paging message, further determines a set of satellites that need to listen to the paging message, and listens to the paging message. Because the set of satellites for listening to the message may be determined based on the satellite orbit identifier notified by a network device, the UE may determine, by receiving a TAC sent by the satellite, whether the satellite belongs to the set of satellites that need to listen to the message, to determine whether to further receive the paging information.

In comparison with the conventional technology, when a terminal can communicate with satellites on a plurality of orbits, the terminal may negotiate with a network device, only a satellite on one or more of the satellite orbits sends a paging message, and the terminal receives only the paging message from the satellite on the one or more satellite orbits, to reduce network side overheads, reduce receiving power consumption of the terminal, and reduces data processing complexity. Compared with the foregoing solution in which a paging update is triggered by a projection location change, in this solution, a paging update is triggered based on a change of a satellite orbit on which a terminal needs to camp, data processing complexity is significantly reduced.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 11 is a possible example block diagram of a communication apparatus according to an embodiment of this application. As shown in FIG. 11, the communication apparatus 1100 may include a processing unit 1101 and a transceiver unit 1102. The processing unit 1101 is configured to control and manage an action of the communication apparatus 1100. The transceiver unit 1102 is configured to support communication between the communication apparatus 1100 and another device. Optionally, the transceiver unit 1102 may include a receiving unit and/or a sending unit, which are respectively configured to perform a receiving operation and a sending operation. Optionally, the communication apparatus 1100 may further include a storage unit, configured to store program code and/or data of the communication apparatus 1100. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing terminal, network device, satellite, or the like.

In an embodiment, the transceiver unit 1102 is configured to: receive satellite parameter information, where the satellite parameter information includes at least one of the following: satellite ephemeris information, satellite orbit information, and satellite projected track information; send a projection location of a terminal, where the projection location is determined by the processing unit 1101 based on satellite parameter information of a first satellite; and the projection location is determined based on a location of the terminal and orbit information of the first satellite, or is determined based on a location of the terminal and projected track information of the first satellite, where the first satellite is a satellite that communicates with the terminal; and receive a paging message.

In an embodiment, the transceiver unit 1102 is configured to: send satellite parameter information, where the satellite parameter information includes at least one of the following: satellite ephemeris information, satellite orbit information, and satellite projected track information; and receive a projection location of the terminal, where the projection location is determined based on satellite parameter information of a first satellite; and the projection location is determined based on a location of the terminal and orbit information of the first satellite, or is determined based on a location of the terminal and projected track information of the first satellite, where the first satellite is a satellite that communicates with the terminal; and the processing unit 1101 is configured to determine, based on the projected location, a device configured to send a paging message.

In an optional implementation, the projection location indicates an orbit point that is on an orbit of the first satellite and that is closest to the terminal or a point in a neighborhood range of the orbit point; the projection location indicates a track point that is on a projected track of the first satellite and that is closest to the terminal or a point in a neighborhood range of the track point; or the projection location indicates a track segment that is on a projected track of the first satellite and that is closest to the terminal or a track segment in a neighborhood range of the track point.

The first satellite is a satellite belonging to a ground co-track satellite chain, and the ground co-track satellite chain includes a plurality of satellites that have a same ground projected track.

In an optional implementation, the track point is indicated by using one of the following parameters:

a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In an optional implementation, when the first satellite is not located on the ground co-track satellite chain, the projection location is indicated by using an opening angle between the orbit point closest to the terminal and any point on the orbit of the first satellite relative to the earth center;

or

when the first satellite is located on the ground co-track satellite chain, the projection location is indicated by using an offset between the track point or the track segment closest to the terminal and the reference point.

In an optional implementation, the satellite parameter information further includes a satellite orbit index, and the satellite orbit index indicates the satellite orbit information or the satellite projected track information.

In an optional implementation, the projection location further includes a satellite orbit index of the first satellite.

In an optional implementation, the satellite parameter information further includes a paging number, and the paging number corresponds to a satellite orbit interval or a satellite track interval.

In an optional implementation, when the first satellite is not located on the ground co-track satellite chain, a satellite orbit interval of the first satellite is indicated by using an interval between opening angles between any two orbit points on the orbit of the first satellite and any point on the orbit of the first satellite relative to the earth center;

or

when the first satellite is located on the ground co-track satellite chain, a satellite track interval of the first satellite is indicated by using an interval between offsets between two points on the projected track of the first satellite and the reference point.

In an optional implementation, the projection location further includes a paging number corresponding to the first satellite.

In an optional implementation, the satellite orbit information includes at least one of the following: a satellite orbit type, satellite altitude information, satellite inclination angle information, satellite ascending node angle information, and satellite perigee angle information.

In an optional implementation, the transceiver unit 1102 is configured to send an update message, where the update message includes a projection location of the terminal on an orbit of a second satellite or a location that is of the terminal and that is on a ground projected track of the second satellite.

In an optional implementation, the transceiver unit 1102 is configured to receive an update message, where the update message includes a projection location of the terminal on an orbit of a second satellite or a location that is of the terminal and that is on a ground projected track of the second satellite.

In an optional implementation, the update message is triggered based on a change of the location of the terminal and a change of the projection location.

In an optional implementation, the change of the projection location includes at least one of the following cases: orbit information or projected track information of the satellite on which the terminal camps is changed, a change of an orbit point of the terminal on the orbit of the first satellite exceeds a preset orbit point threshold, a track point of the terminal on the projected track of the first satellite exceeds a preset track point threshold, and a track segment of the terminal on the projected track of the first satellite exceeds a preset track segment threshold.

In an optional implementation, the update message further includes a difference parameter, and the difference parameter is changed satellite orbit information of the second satellite relative to the first satellite or changed satellite projected track information of the second satellite relative to the first satellite.

In an optional implementation, when neither the second satellite nor the first satellite is on the ground co-track satellite chain, and the second satellite and the first satellite are located on different orbits, the difference parameter is an ascending node angle or an orbit number of the second satellite;

when the second satellite and the first satellite belong to the same ground co-track satellite chain, the difference parameter includes a location of the reference point; and

when the second satellite and the first satellite belong to different ground co-track satellite chains, the difference parameter is a reference point or a track number of the ground co-track of the second satellite.

In an optional implementation, the satellites on the ground co-track satellite chain have a same inclination angle and are located on discrete orbits.

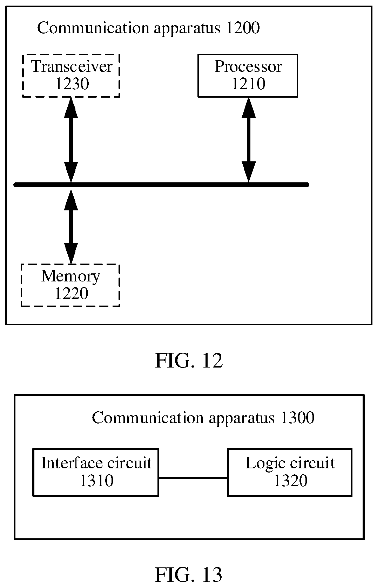

FIG. 12 shows a communication apparatus 1200 further provided in this application. The communication apparatus 1200 may be a chip or a chip system. The communication apparatus may be located in the device in any one of the foregoing method embodiments, for example, the satellite, the network device, or the terminal, to perform an action corresponding to the device.

Optionally, the chip system may include a chip, or may include a chip and another discrete component.

The communication apparatus 1200 includes a processor 1210.

The processor 1210 is configured to execute a computer program stored in a memory 1220, to implement actions of the devices in any one of the foregoing method embodiments.

The communication apparatus 1200 may further include the memory 1220, configured to store the computer program.

Optionally, the memory 1220 is coupled to the processor 1210. The coupling is an indirect coupling or a communication connection between apparatuses, units, or modules, may be in an electrical form, a mechanical from, or another form, and is used for information exchange between the apparatuses, the units, or the modules. Optionally, the memory 1220 and the processor 1210 are integrated together.

There may be one or more processors 1210 and one or more memories 1220. This is not limited.

Optionally, in an actual application, the communication apparatus 1200 may include or may not include a transceiver 1230. A dashed box is used as an example in the figure. The communication apparatus 1200 may exchange information with another device through the transceiver 1230. The transceiver 1230 may be a circuit, a bus, a transceiver, or any other apparatus that may be configured to exchange information.

In a possible implementation, the communication apparatus 1200 may be the first satellite or the ground device in the foregoing method embodiments.

A specific connection medium between the transceiver 1230, the processor 1210, and the memory 1220 is not limited in this embodiment of this application. In this embodiment of this application, the memory 1220, the processor 1210, and the transceiver 1230 are connected through a bus in FIG. 12. The bus is represented by using a thick line in FIG. 12. A manner of a connection between other components is merely an example for description, and is not limited thereto. The bus may be classified into an address bus, a data bus, a control bus, and the like. For ease of representation, only one bold line indicates the bus in FIG. 12, but this does not mean that there is only one bus or only one type of bus. In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). Alternatively, the memory may be any other medium that can be configured to carry or store expected program code in a form of an instruction or a data structure and that can be accessed by a computer, but is not limited thereto. Alternatively, the memory in this embodiment of this application may be a circuit or any other apparatus that can implement a storage function, and is configured to store a computer program, program instructions, and/or data.

Based on the foregoing embodiments, refer to FIG. 13. An embodiment of this application further provides another communication apparatus 1300, including an interface circuit 1310 and a logic circuit 1320. The interface circuit 1310 may be understood as an input/output interface, and may be configured to perform sending and receiving steps of each device in any one of the foregoing method embodiments. The logic circuit 1320 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application provides a communication system. The communication system includes the satellite, the terminal, and the network device mentioned in any one of the foregoing method embodiments, and the satellite, the terminal, and the network device may be configured to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

Alternatively, these computer program instructions may be stored in a computer-readable memory that can instruct the computer or the another programmable data processing apparatus to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

**Claims**

1.  A paging method, comprising:

    receiving, by a terminal, satellite parameter information, wherein the satellite parameter information comprises at least one of the following: satellite ephemeris information, satellite orbit information, and satellite projected track information;
    sending, by the terminal, a projection location of the terminal, wherein the projection location of the terminal is determined based on satellite parameter information of a first satellite; and the projection location of the terminal is determined based on a location of the terminal and orbit information of the first satellite, or is determined based on a location of the terminal and projected track information of the first satellite, wherein the first satellite is a satellite that communicates with the terminal; and
    receiving, by the terminal, a paging message.

2.  A paging method, comprising:

    sending, by a network device, satellite parameter information, wherein the satellite parameter information comprises at least one of the following: satellite ephemeris information, satellite orbit information, and satellite projected track information;
    receiving, by the network device, a projection location of a terminal, wherein the projection location of the terminal is determined based on satellite parameter information of a first satellite; and the projection location is determined based on a location of the terminal and orbit information of the first satellite, or is determined based on a location of the terminal and projected track information of the first satellite, wherein the first satellite is a satellite that communicates with the terminal; and
    determining, by the network device based on the projection location of the terminal, a device configured to send a paging message.

3.  The method according to claim 1 or 2, wherein the projection location of the terminal indicates an orbit point that is on an orbit of the first satellite and that is closest to the terminal or a point in a neighborhood range of the orbit point; the projection location of the terminal indicates a track point that is on a projected track of the first satellite and that is closest to the terminal or a point in a neighborhood range of the track point; or the projection location of the terminal indicates a track segment that is on a projected track of the first satellite and that is closest to the terminal or a track segment in a neighborhood range of the track segment, wherein
    the first satellite is a satellite belonging to a ground co-track satellite chain, and the ground co-track satellite chain comprises a plurality of satellites that have a same ground projected track.

4.  The method according to claim 3, wherein the track point is indicated by using one of the following parameters:
    a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

5.  The method according to claim 3 or 4, wherein when the first satellite is not located on the ground co-track satellite chain, the projection location of the terminal is indicated by using an opening angle between the orbit point closest to the terminal and any point on the orbit of the first satellite relative to the earth center;
    or
    when the first satellite is located on the ground co-track satellite chain, the projection location of the terminal is indicated by using an offset between the track point or the track segment closest to the terminal and the reference point.

6.  The method according to any one of claims 1 to 5, wherein the satellite parameter information further comprises a satellite orbit index, and the satellite orbit index indicates the satellite orbit information or the satellite projected track information.

7.  The method according to claim 6, wherein the projection location of the terminal further comprises a satellite orbit index of the first satellite.

8. The method according to any one of claims 1 to 5, wherein the satellite parameter information further comprises a paging number, and the paging number corresponds to a satellite orbit interval or a satellite track interval.

9. The method according to claim 8, wherein when the first satellite is not located on the ground co-track satellite chain, a satellite orbit interval of the first satellite is indicated by using an interval between opening angles between any two orbit points on the orbit of the first satellite and any point on the orbit of the first satellite relative to the earth center; or
   when the first satellite is located on the ground co-track satellite chain, a satellite track interval of the first satellite is indicated by using an interval between offsets between two points on the projected track of the first satellite and the reference point.

10. The method according to claim 8 or 9, wherein the projection location of the terminal further comprises a paging number corresponding to the first satellite.

11. The method according to any one of claims 1 to 10, wherein the satellite orbit information comprises at least one of the following: a satellite orbit type, satellite altitude information, satellite inclination angle information, satellite ascending node angle information, and satellite perigee angle information.

12. The method according to any one of claims 1 and 3 to 10, wherein the method further comprises:
    sending, by the terminal, an update message, wherein the update message comprises a projection location of the terminal on an orbit of a second satellite or a location that is of the terminal and that is on a ground projected track of the second satellite.

13. The method according to any one of claims 2 to 10, wherein the method further comprises:
    receiving, by the network device, an update message, wherein the update message comprises a projection location of the terminal on an orbit of a second satellite or a location that is of the terminal and that is on a ground projected track of the second satellite.

14. The method according to claim 12 or 13, wherein the update message is triggered based on a change of the location of the terminal and a change of the projection location.

15. The method according to claim 14, wherein the change of the projection location comprises at least one of the following cases:
    orbit information or projected track information of the satellite on which the terminal camps is changed, a change of an orbit point of the terminal on the orbit of the first satellite exceeds a preset orbit point threshold, a track point of the terminal on the projected track of the first satellite exceeds a preset track point threshold, and a track segment of the terminal on the projected track of the first satellite exceeds a preset track segment threshold.

16. The method according to any one of claims 12 to 15, wherein the update message further comprises a difference parameter, and the difference parameter is changed satellite orbit information of the second satellite relative to the first satellite or changed satellite projected track information of the second satellite relative to the first satellite.

17. The method according to claim 16, wherein when neither the second satellite nor the first satellite is on the ground co-track satellite chain, and the second satellite and the first satellite are located on different orbits, the difference parameter is an ascending node angle or an orbit number of the second satellite;

    when the second satellite and the first satellite belong to the same ground co-track satellite chain, the difference parameter comprises a location of the reference point; and
    when the second satellite and the first satellite belong to different ground co-track satellite chains, the difference parameter is a reference point or a track number of the ground co-track of the second satellite.

18. The method according to any one of claims 2 to 15, wherein the satellites on the ground co-track satellite chain have a same inclination angle and are located on discrete orbits.

19. A paging method, comprising:

    sending, by a network device, satellite parameter information, wherein the satellite parameter information comprises at least one of the following: satellite ephemeris information, satellite orbit information, and satellite projected track information;

receiving, by a terminal, the satellite parameter information;

sending, by the terminal, a projection location of the terminal, wherein the projection location of the terminal is determined based on satellite parameter information of a first satellite; and the projection location of the terminal is determined based on a location of the terminal and orbit information of the first satellite, or is determined based on a location of the terminal and projected track information of the first satellite, wherein the first satellite is a satellite that communicates with the terminal;

receiving, by the network device, the projection location of the terminal;

determining, by the network device based on the projection location of the terminal, a device configured to send a paging message; and

receiving, by the terminal, the paging message.

20. A communication apparatus, comprising a transceiver unit and a processing unit, wherein

the transceiver unit is configured to: receive satellite parameter information, wherein the satellite parameter information comprises at least one of the following: satellite ephemeris information, satellite orbit information, and satellite projected track information; and send a projection location of the communication apparatus, wherein the projection location of the communication apparatus is determined by the processing unit based on satellite parameter information of a first satellite; and the projection location of the communication apparatus is determined based on a location of the communication apparatus and orbit information of the first satellite, or is determined based on a location of the communication apparatus and projected track information of the first satellite, wherein the first satellite is a satellite that communicates with the communication apparatus; and the transceiver unit is further configured to receive a paging message.

21. The apparatus according to claim 20, wherein the projection location of the communication apparatus indicates an orbit point that is on an orbit of the first satellite and that is closest to the communication apparatus or a point in a neighborhood range of the orbit point; the projection location of the communication apparatus indicates a track point that is on a projected track of the first satellite and that is closest to the communication apparatus or a point in a neighborhood range of the track point; or the projection location of the communication apparatus indicates a track segment that is on a projected track of the first satellite and that is closest to the communication apparatus or a track segment in a neighborhood range of the track segment, wherein
the first satellite is a satellite belonging to a ground co-track satellite chain, and the ground co-track satellite chain comprises a plurality of satellites that have a same ground projected track.

22. The apparatus according to claim 21, wherein the track point is indicated by using one of the following parameters: a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

23. The apparatus according to claim 21 or 22, wherein when the first satellite is not located on the ground co-track satellite chain, the projection location of the communication apparatus is indicated by using an opening angle between the orbit point closest to the communication apparatus and any point on the orbit of the first satellite relative to the earth center; or
when the first satellite is located on the ground co-track satellite chain, the projection location of the communication apparatus is indicated by using an offset between the track point or the track segment closest to the communication apparatus and a reference point.

24. The apparatus according to any one of claims 20 to 23, wherein the satellite parameter information further comprises a satellite orbit index, and the satellite orbit index indicates the satellite orbit information or the satellite projected track information.

25. The apparatus according to claim 24, wherein the projection location of the communication apparatus further comprises a satellite orbit index of the first satellite.

26. The apparatus according to any one of claims 20 to 23, wherein the satellite parameter information further comprises a paging number, and the paging number corresponds to a satellite orbit interval or a satellite track interval.

27. The apparatus according to claim 26, wherein when the first satellite is not located on the ground co-track satellite chain, a satellite orbit interval of the first satellite is indicated by using an interval between opening angles between any two orbit points on the orbit of the first satellite and any point on the orbit of the first satellite relative to the earth center; or

when the first satellite is located on the ground co-track satellite chain, a satellite track interval of the first satellite is indicated by using an interval between offsets between two points on the projected track of the first satellite and the reference point.

28. The apparatus according to claim 26 or 27, wherein the projection location of the communication apparatus further comprises a paging number corresponding to the first satellite.

29. The apparatus according to any one of claims 20 to 28, wherein the satellite orbit information comprises at least one of the following: a satellite orbit type, satellite altitude information, satellite inclination angle information, satellite ascending node angle information, and satellite perigee angle information.

30. The apparatus according to any one of claims 20 to 29, wherein the transceiver unit is further configured to: send an update message, wherein the update message comprises a projection location of the communication apparatus on an orbit of a second satellite or a location that is of the communication apparatus and that is on a ground projected track of the second satellite.

31. The apparatus according to claim 30, wherein the update message is triggered based on a change of the location of the communication apparatus and a change of the projection location.

32. The apparatus according to claim 31, wherein the change of the projection location comprises at least one of the following cases:
orbit information or projected track information of a satellite on which the communication apparatus camps is changed, a change of an orbit point of the communication apparatus on the orbit of the first satellite exceeds a preset orbit point threshold, a track point of the communication apparatus on the projected track of the first satellite exceeds a preset track point threshold, and a track segment of the communication apparatus on the projected track of the first satellite exceeds a preset track segment threshold.

33. The apparatus according to any one of claims 30 to 32, wherein the update message further comprises a difference parameter, and the difference parameter is changed satellite orbit information of the second satellite relative to the first satellite or changed satellite projected track information of the second satellite relative to the first satellite.

34. The apparatus according to claim 33, wherein when neither the second satellite nor the first satellite is on the ground co-track satellite chain, and the second satellite and the first satellite are located on different orbits, the difference parameter is an ascending node angle or an orbit number of the second satellite;

when the second satellite and the first satellite belong to the same ground co-track satellite chain, the difference parameter comprises a location of the reference point; and
when the second satellite and the first satellite belong to different ground co-track satellite chains, the difference parameter is a reference point or a track number of the ground co-track of the second satellite.

35. The apparatus according to any one of claims 21 to 34, wherein satellites on the ground co-track satellite chain have a same inclination angle and are located on discrete orbits.

36. A communication apparatus, comprising a transceiver unit and a processing unit, wherein

the transceiver unit is configured to: send satellite parameter information, wherein the satellite parameter information comprises at least one of the following: satellite ephemeris information, satellite orbit information, and satellite projected track information; and receive a projection location of the terminal, wherein the projection location of the terminal is determined by the processing unit based on satellite parameter information of a first satellite; and the projection location of the terminal is determined based on a location of the terminal and orbit information of the first satellite, or is determined based on a location of the terminal and projected track information of the first satellite, wherein the first satellite is a satellite that communicates with the terminal; and
the processing unit is configured to determine, based on the projection location of the terminal, a device configured to send a paging message.

37. The apparatus according to claim 36, wherein the projection location of the terminal indicates an orbit point that is on an orbit of the first satellite and that is closest to the terminal or a point in a neighborhood range of the orbit point; the projection location of the terminal indicates a track point that is on a projected track of the first satellite and that is closest to the terminal or a point in a neighborhood range of the track point; or the projection location of the terminal indicates a track segment that is on a projected track of the first satellite and that is closest to the terminal or a track segment in a neighborhood range of the track segment, wherein
the first satellite is a satellite belonging to a ground co-track satellite chain, and the ground co-track satellite chain comprises a plurality of satellites that have a same ground projected track.

38. The apparatus according to claim 37, wherein the track point is indicated by using one of the following parameters: a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

39. The apparatus according to claim 37 or 38, wherein when the first satellite is not located on the ground co-track satellite chain, the projection location of the terminal is indicated by using an opening angle between the orbit point closest to the terminal and any point on the orbit of the first satellite relative to the earth center;
or
when the first satellite is located on the ground co-track satellite chain, the projection location of the terminal is indicated by using an offset between the track point or the track segment closest to the terminal and the reference point.

40. The apparatus according to any one of claims 36 to 39, wherein the satellite parameter information further comprises a satellite orbit index, and the satellite orbit index indicates the satellite orbit information or the satellite projected track information.

41. The apparatus according to claim 40, wherein the projection location of the terminal further comprises a satellite orbit index of the first satellite.

42. The apparatus according to any one of claims 36 to 39, wherein the satellite parameter information further comprises a paging number, and the paging number corresponds to a satellite orbit interval or a satellite track interval.

43. The apparatus according to claim 42, wherein when the first satellite is not located on the ground co-track satellite chain, a satellite orbit interval of the first satellite is indicated by using an interval between opening angles between any two orbit points on the orbit of the first satellite and any point on the orbit of the first satellite relative to the earth center;
or
when the first satellite is located on the ground co-track satellite chain, a satellite track interval of the first satellite is indicated by using an interval between offsets between two points on the projected track of the first satellite and the reference point.

44. The apparatus according to claim 42 or 43, wherein the projection location of the terminal further comprises a paging number corresponding to the first satellite.

45. The apparatus according to any one of claims 36 to 44, wherein the satellite orbit information comprises at least one of the following: a satellite orbit type, satellite altitude information, satellite inclination angle information, satellite ascending node angle information, and satellite perigee angle information.

46. The apparatus according to any one of claims 36 to 45, wherein
the transceiver unit is further configured to receive an update message, wherein the update message comprises a projection location of the terminal on an orbit of a second satellite or a location that is of the terminal and that is on a ground projected track of the second satellite.

47. The apparatus according to claim 46, wherein the update message is triggered based on a change of the location of the terminal and a change of the projection location.

48. The apparatus according to claim 47, wherein the change of the projection location comprises at least one of the following cases:
orbit information or projected track information of the satellite on which the terminal camps is changed, a change of an orbit point of the terminal on the orbit of the first satellite exceeds a preset orbit point threshold, a track point of the terminal on the projected track of the first satellite exceeds a preset track point threshold, and a track segment of the terminal on the projected track of the first satellite exceeds a preset track segment threshold.

49. The apparatus according to any one of claims 46 to 48, wherein the update message further comprises a difference parameter, and the difference parameter is changed satellite orbit information of the second satellite relative to the first satellite or changed satellite projected track information of the second satellite relative to the first satellite.

50. The apparatus according to claim 49, wherein when neither the second satellite nor the first satellite is on the ground co-track satellite chain, and the second satellite and the first satellite are located on different orbits, the difference parameter is an ascending node angle or an orbit number of the second satellite;

when the second satellite and the first satellite belong to the same ground co-track satellite chain, the difference parameter comprises a location of the reference point; and
when the second satellite and the first satellite belong to different ground co-track satellite chains, the difference parameter is a reference point or a track number of the ground co-track of the second satellite.

51. The apparatus according to any one of claims 36 to 50, wherein satellites on the ground co-track satellite chain have a same inclination angle and are located on discrete orbits.

52. A communication apparatus, comprising at least one processor and a memory, wherein

the memory is configured to store a computer program or instructions; and
the at least one processor is configured to execute the computer program or the instructions, to perform the method according to any one of claims 1 to 19.

53. A computer-readable storage medium, wherein the computer-readable storage medium stores instructions; and when the instructions are executed by a computer, the method according to any one of claims 1 to 19 is performed.

54. A computer program product comprising a computer program or instructions, wherein when the computer program product runs on a computer, the method according to any one of claims 1 to 19 is performed.

FIG. 1

FIG. 2

FIG. 3

GEO satellite

LEO
satellite

LEO
satellite

LEO
satellite

Gateway
device

Gateway
device

Core
network
device

Terminal
device

Terminal
device

Terminal
device

Base station

Terminal
device

FIG. 4

FIG. 5A

FIG. 5B

FIG. 6

Earth

Reference point

Track point 1    Accumulated latitude difference: 517.1 degrees    Track point 1    Accumulated latitude difference: 38.3 degrees

FIG. 7

Projected point

FIG. 8A

Track point B PH1

**FIG. 8B**

Orbit point A PH0

Orbit interval 1

Orbit point B PH1

Orbit interval 2

Orbit point C PH2

**FIG. 9A**

Track point B PH11   Track point A PH13

Track interval 1

Track interval 2

Track point A PH10

Track point C PH12

**FIG. 9B**

| Terminal | First network device 1 | Control device | First network device 2 |
|----------|-----------------------|----------------|------------------------|

Step 1001: The terminal determines a satellite orbit identifier of a device that is to listen to a message

Step 1002: Send the satellite orbit identifier determined by the terminal

Step 1003: Send the satellite orbit identifier determined by the terminal

Step 1004: Determine, based on the satellite orbit identifier determined by the terminal, a device configured to send a paging message

Step 1005: Send a message including the determined device configured to send the paging message

Step 1006: Send the paging message

FIG. 10

Communication apparatus 1100

Transceiver unit 1102

Processing unit 1101

FIG. 11

Communication apparatus 1200

Transceiver
1230

Processor
1210

Memory
1220

FIG. 12

Communication apparatus 1300

Interface circuit
1310

Logic circuit
1320

FIG. 13

**INTERNATIONAL SEARCH REPORT**

| International application No. |
|---|
| **PCT/CN2023/093202** |

| A. | CLASSIFICATION OF SUBJECT MATTER |
|---|---|

H04W68/00(2009.01)i;  H04W 64/00(2009.01)i

According to International Patent Classification (IPC) or to both national classification and IPC

| B. | FIELDS SEARCHED |
|---|---|

Minimum documentation searched (classification system followed by classification symbols)

IPC: H04W; H04B; H04L

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE; 3GPP: 轨迹, 投影, 位置, 卫星, 星历, 轨道, 寻呼, 终端, track, projection, position, location, place, satellite, almanac data, ephemeris data, paging, terminal, real-time position

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113098589 A (GUANGZHOU IPLOOK TECHNOLOGIES CO., LTD.) 09 July 2021 (2021-07-09)<br>description, paragraphs [0003]-[0059], and figures 1-3 | 1-54 |
| A | CN 113328784 A (GUANGZHOU IPLOOK TECHNOLOGIES CO., LTD.) 31 August 2021 (2021-08-31)<br>entire document | 1-54 |
| A | CN 111194080 A (TELECOMMUNICATIONS RESEARCH INSTITUTE CO., LTD.) 22 May 2020 (2020-05-22)<br>entire document | 1-54 |
| A | WO 2022081531 A1 (INTEL CORPORATION et al.) 21 April 2022 (2022-04-21)<br>entire document | 1-54 |
| A | WO 2022089310 A1 (HUAWEI TECHNOLOGIES CO., LTD.) 05 May 2022 (2022-05-05)<br>entire document | 1-54 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 August 2023** | **16 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/093202**

| Patent document cited in search report | | | Publication date (day/month/year) | Patent family member(s) | | | Publication date (day/month/year) |
|---|---|---|---|---|---|---|---|
| CN | 113098589 | A | 09 July 2021 | None | | | |
| CN | 113328784 | A | 31 August 2021 | WO | 2022247440 | A1 | 01 December 2022 |
| CN | 111194080 | A | 22 May 2020 | WO | 2020098632 | A1 | 22 May 2020 |
| | | | | EP | 3883278 | A1 | 22 September 2021 |
| | | | | US | 2022007328 | A1 | 06 January 2022 |
| WO | 2022081531 | A1 | 21 April 2022 | None | | | |
| WO | 2022089310 | A1 | 05 May 2022 | EP | 4216165 | A1 | 26 July 2023 |
| | | | | CN | 114494408 | A | 13 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210674457